# EUROPEAN PATENT SPECIFICATION

(11) **EP 2 202 140 B1**
(45) Date of publication and mention of the grant of the patent: **06.10.2010**
(21) Application number: 09179853.8
(22) Date of filing: 18.12.2009
(51) Int. Cl.: B62K 25/28, B60G 17/015

(54) **Stroke distance sensor system**
Hubdistanzsensorsystem
Système de capteur de course

(30) Priority: 26.12.2008 JP 2008333467
(43) Date of publication of application: 30.06.2010
(73) Proprietor: Honda Motor Co., Ltd., Tokyo 107-8556 (JP)
(72) Inventor: Suzuki, Osamu, Saitama 351-0193 (JP)
(74) Representative: Beder, Jens

(56) References cited:
- JP-A- 2 109 710
- JP-A- 2 182 518
- JP-A- 3 128 785
- JP-A- 3 176 218
- JP-A- 4 011 591
- JP-A- 4 321 481
- JP-A- 57 155 107

## Description

### [Technical Field]

The present invention relates to a two-wheeled vehicle with a stroke sensor system for sensing the stroke of a swing arm rear wheel suspension of the two-wheeled vehicle.

### [Background Art]

Heretofore, stroke sensor systems have been known which sense the stroke of a rear wheel suspension of a two-wheeled vehicle.

Patent Document 1 discloses a stroke sensor system including a bar-shaped stroke sensor directly attached to a shock absorber constituting a swing arm rear wheel suspension. The bar-shaped stroke sensor is capable of sensing a sliding amount of the shock absorber in the axial direction thereof, and the stroke sensor system senses the stroke of the rear wheel suspension on the basis of an output value of the stroke sensor.
JP 02 182518 A discloses a motorcycle with a cushion unit and with a stroke sensor system according to the preamble of claim 1.
[Patent Document 1] Japanese Patent Application Publication No. H7-208529

### [Disclosure of the Invention]

### [Problems to be Solved by the Invention]

However, the stroke sensor system described in Patent Document 1 has the following problems. Specifically, the stroke sensor for sensing an axial sliding distance is relatively expensive and ensuring a mounting space for the stroke sensor requires changes in the shapes of the shock absorber and other components, such as a swing arm, disposed therearound.

An object of the present invention is to provide a two-wheeled vehicle with a stroke sensor system which addresses the above-described problems of the related art and which can sense the stroke of a swing arm rear wheel suspension of the two-wheeled vehicle using a rotation angle sensor.

### [Means for Solving the Problems]

The above-described object is achieved by a two-wheeled vehicle having the features of present claim 1.

Further, the present invention has a second **characteristic in that** the rotational shaft of the rotation angle sensor is located above the vehicle-body-side rotational shaft of the cushion connecting rod in a vehicle body.

Further, the present invention has a third **characteristic in that** the first and second levers are disposed to make approximately a right angle with respect to each other when the swing arm is at an upper swing limit position.

Further, the present invention has a fourth **characteristic in that** the rotation angle sensor is a potentiometer.

### [Effects of the Invention]

According to the first characteristic, the rotation angle transmission mechanism including the first and second levers is used to transmit the swing angle of the cushion connecting rod to the rotation angle sensor mounted to the vehicle-body frame. This enables the rotation angle sensor to sense the swing amount of the cushion connecting rod which swings in synchronization with the swing arm. Thus, the stroke of a rear wheel suspension of a two-wheeled vehicle can be sensed with a rotation angle sensor having a simpler structure than that of a stroke sensor of an expansion-contraction type.
Further, the use of the link-type rotation angle transmission mechanism including the first and second levers facilitates desired setting the ratio between the swing angle of the cushion connecting rod and the rotation angle of the rotational shaft of the rotation angle sensor. Moreover, the stroke of the rear wheel suspension can be sensed without making significant changes to the shock absorber and components therearound. This facilitates retrofitting the stroke sensor system to a rear wheel suspension of an existing two-wheeled vehicle.
Also, the space between the cushion connecting rod and the vehicle-body frame can be effectively used to dispose the stroke sensor system. According to the characterizing portion of claim 1, the distance between the rotational shaft of the rotation angle sensor and the connecting rotational shaft is set smaller than the distance between the vehicle-body-side rotational shaft of the cushion connecting rod and a rotational shaft of the first lever.
Accordingly, the ratio of the operation angle of the rotation angle sensor to the swing angle of the cushion connecting rod can be set large. In other words, the swing angle of the cushion connecting rod can be amplified to be transmitted to the rotational shaft of the rotation angle sensor. Thus, high-precision stroke sensing can be performed even when a rotation angle sensor with a not-so-high precision is used.

According to the second characteristic, the rotational shaft of the rotation angle sensor is located above the vehicle-body-side rotational shaft of the cushion connecting rod in the vehicle body. Accordingly, the rotation angle transmission means and the rotation angle sensor are located above the cushion connecting rod. Thus, the stroke sensor system can be protected from splashes of water, incoming pebbles, and the like while the vehicle is travelling.

According to the third characteristic, the first and second levers are disposed to make approximately a right angle with respect to each other when the swing arm is at the upper swing limit position. This enables the stroke sensor system to operate in a range in which the rotation angle transmission means easily operates.

According to the fourth characteristic, the rotation angle sensor is a potentiometer. Accordingly, the stroke can be sensed with a simple-structure sensor.

### [Best Mode for Carrying Out the Invention]

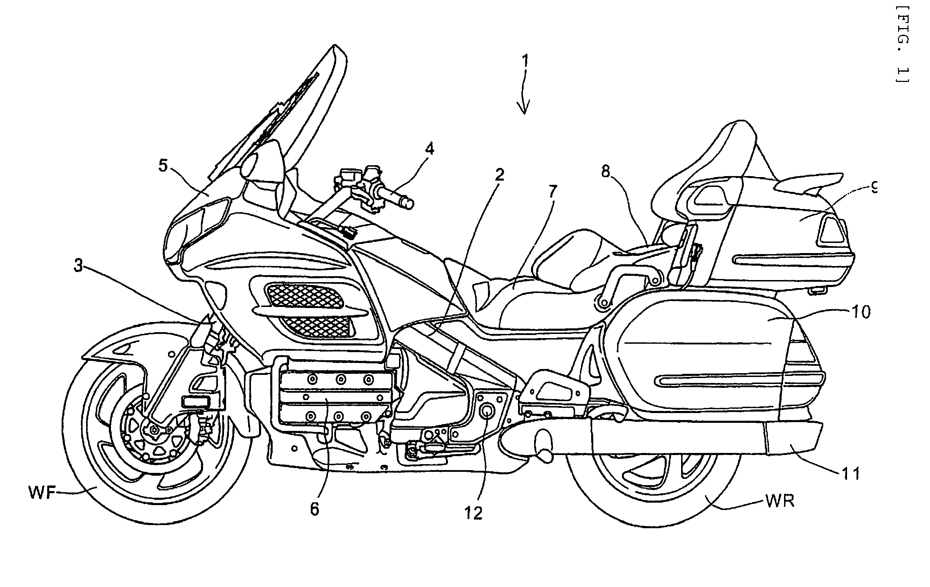

Hereinafter, preferred embodiments of the present invention will be described in detail with reference to drawings. Fig. 1 is a side view of a motorcycle 1 to which a stroke sensor system according to one embodiment of the present invention is applied. To a front end portion of a vehicle-body frame 2 of the motorcycle 1, a pair of left and right front forks 3 which rotatably and pivotally support a front wheel WF are swingably mounted so as to be steerable by steering handlebars 4. In a lower portion of the vehicle-body frame 2, an engine 6 is suspended. A forward portion of the vehicle-body frame 2 is covered with a front cowl 5 as an exterior component.

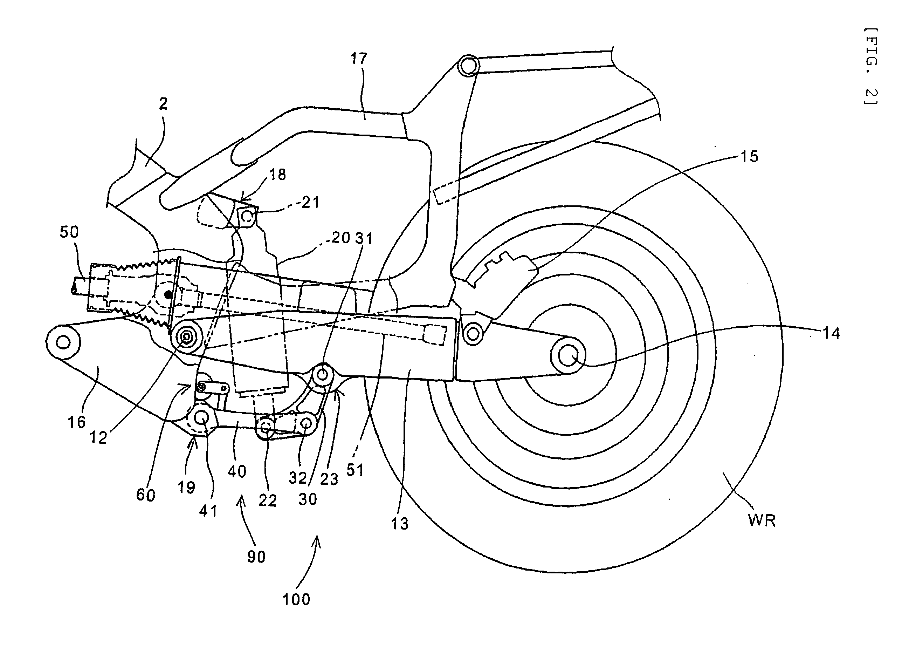

A seat 7 on which a driver is seated is mounted to an approximately longitudinal center of the vehicle body, and a passenger seat 8 is provided behind the seat 7 on the vehicle body. A rear wheel WR as a driving wheel is rotatably and pivotally supported on a rear end portion of a swing arm 13 (see Fig. 2) which is swingably and pivotally supported on the vehicle-body frame 2 by a pivot shaft 12. Pairs of left and right mufflers 11 and saddlebags 10 are disposed to the vehicle-widthwise left and right of the rear wheel WR, and a trunk 9 is mounted to the vehicle-widthwise center of the vehicle above the saddlebags 10.

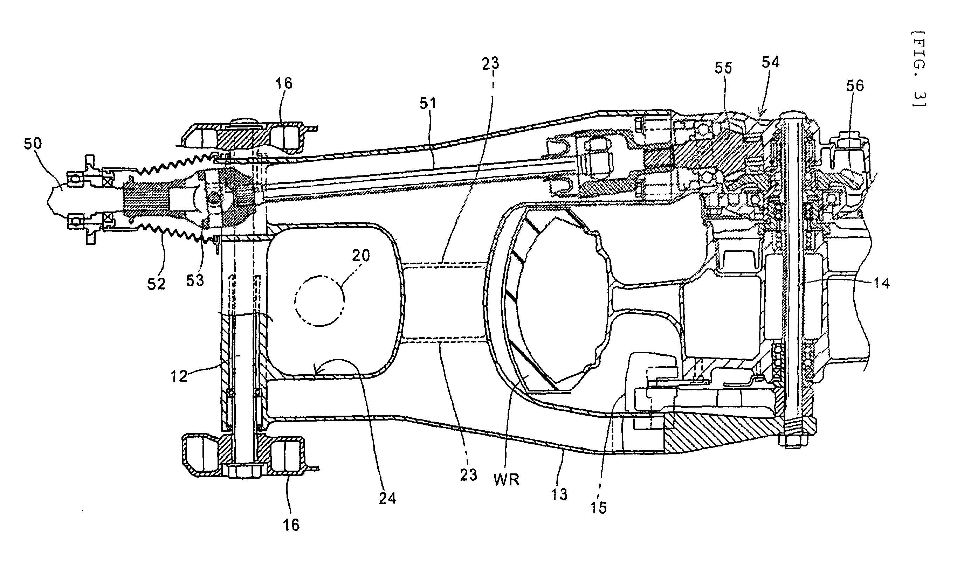

Fig. 2 is an enlarged view showing part of Fig. 1 with exterior components being removed. Fig. 3 is a cross-sectional view of the swing arm 13 as seen from the top. The vehicle-body frame 2 principally includes a head pipe (not shown) a pair of left and right main pipes, a pair of left and right pivot plates 16. By the head pipe, a steering mechanism is rotatably and pivotally supported. The main pipes are coupled to the head pipe and extend toward the rear of the vehicle body, and the pivot plates 16 are coupled to rear portions of the main pipes. The pivot shaft 12 is provided at the pivot plates 16. Further, a hanger for suspending the engine 6 is formed on the vehicle-body front side of the pivot plates 16. This drawing shows part of the pivot plates 16 being cut away so that the arrangement of the swing arm 13 with respect to the vehicle-body frame 2 will be clear.

To a rear portion of the vehicle-body frame 2, a rear frame 17 which supports the seat 7, the trunk 9, and the like is connected. The rear wheel WR is rotatably and pivotally supported by an axle 14 provided at a rear end portion of the swing arm 13. In vehicle body front of the axle 14, a rear brake caliper 15 is mounted. The rotational driving force of the engine 6 is transmitted to the rear wheel WR through a drive shaft 51 which passes through the inside of the swing arm 13 and which is connected to an output shaft 50 through a universal joint.

A force, which swings the swing arm 13 in the counterclockwise direction in the drawing while the motorcycle 1 is in motion or the like, is absorbed by a shock absorber 20 with a spring. Under the shock absorber 20, a link mechanism 90 is provided which, in cooperation with the shock absorber 20, connects the vehicle-body frame 2 and the swing arm 13. The link mechanism 90 principally includes a cushion arm 30 and a cushion connecting rod 40. In this embodiment, an entire suspension system including the link mechanism 90, the swing arm 13, and the shock absorber 20 is referred to as a rear wheel suspension 100.

The cushion connecting rod 40 has a structure in which a pair of left and right arm portions are connected to each other with a connecting pipe provided on a vehicle front side of each arm portions. In lower portions of the pivot plates 16, cushion connecting rod mounting portions 19 are formed. A front-side end portion, i.e., a vehicle-body-side end portion, of the cushion connecting rod 40 is rotatably and pivotally supported on the cushion connecting rod mounting portions 19, by a pivot bolt 41 serving as a vehicle-body-side rotational shaft which passes through the center of the connecting pipe along the axis thereof.

The cushion arm 30 is provided with three rotational shafts. A vehicle-rear-side end portion of the cushion arm 30 is rotatably and pivotally supported on a cushion arm mounting portion 23 formed on the lower surface of the swing arm 13, by a swing-arm-side rotational shaft 31 formed by use of a mounting bolt. A vehicle-front-side end portion of the cushion arm 30 rotatably and pivotally supports a lower mounting portion of the shock absorber 20 by a rotational shaft 22 formed by use of a mounting bolt. An approximately longitudinal center portion of the cushion arm 30 is rotationally connected to a rear-side end portion of the cushion connecting rod 40 with a rotational shaft 32 formed by use of a mounting bolt.

The shock absorber 20 is disposed at approximately the vehicle-widthwise center of the vehicle. On a connecting pipe which connects the left and right pivot plates 16, a shock absorber mounting portion 18 is formed. An upper portion of the shock absorber 20 is rotatably and pivotally supported by a rotational shaft 21 formed by use of a mounting bolt on the shock absorber mounting portion 18.

The rear wheel suspension 100 of the motorcycle 1 having the above-described link structure can realize such a variable ratio that, for example, a stroke ratio of the shock absorber 20 decreases as a swing angle of the swing arm 13 increases. Characteristics of the variable ratio can be set as desired by setting the dimensions of the link mechanism 90.

In this embodiment, above the cushion connecting rod mounting portions 19 formed in the pivot plates 16, a stroke sensor system 60 for sensing the stroke of the rear wheel suspension 100 is mounted. This stroke sensor system 60 is configured to sense the swing angle of the cushion connecting rod 40 with respect to the pivot plates 16, i.e., the vehicle-body frame 2.

Referring to Fig. 3, the shock absorber 20 passes through a through hole 24 formed in the swing arm 13. A universal joint 53 is capable of transmitting driving force from the output shaft 50 to the drive shaft 51, while accommodating the swinging motion of the swing arm 13. Around the universal joint, a corrugated rubber boot 52 is disposed. To a rear end portion of the drive shaft 51, a pinion gear 55 provided in a final drive box 54 is connected. The pinion gear 55 meshes with a ring gear 56 non-rotatably attached to a wheel hub of the rear wheel WR.

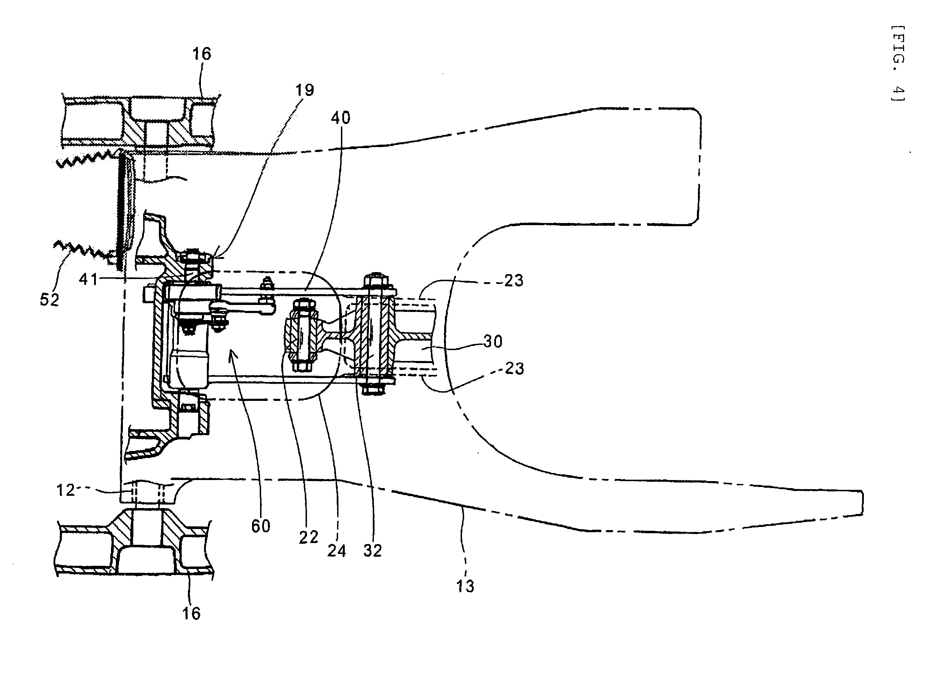

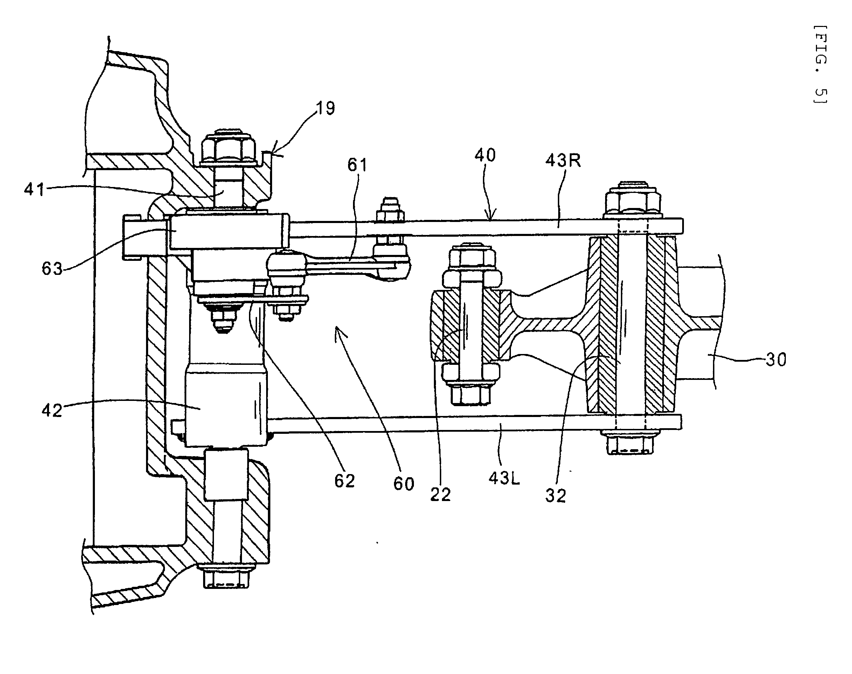

Fig. 4 is a view for explaining the arrangement of the link mechanism 90. This drawing shows the swing arm 13 as seen from the top. Fig. 5 is an enlarged view showing part of Fig. 4. As described previously, the cushion connecting rod 40 has a structure in which a pair of vehicle-widthwise left and right arm portions 43L and 43R are connected to each other with a connecting pipe 42 on a vehicle front side. The connecting pipe 42 is disposed to be sandwiched between the left and right cushion connecting rod mounting portions 19. The arm portions 43L and 43R of the cushion connecting rod 40 are configured so as to sandwich from left and right an approximately middle portion of the cushion arm 30 through which the rotational shaft 32 passes.

The stroke sensor system 60 according to this embodiment employs a rotation angle transmission mechanism including first and second levers 61 and 62, thus sensing the swing angle of the cushion connecting rod 40 with respect to the vehicle-body frame 2 using a rotation angle sensor 63 formed by use of a potentiometer. Accordingly, the rotation angle sensor 63 is disposed not coaxially with the vehicle-body-side rotational shaft 41 of the cushion connecting rod 40 but away from the vehicle-body-side rotational shaft 41 by a predetermined distance. It should be noted that in this embodiment, the rotation angle transmission mechanism is disposed inward of the arm portion 43R to effectively utilize a dead space and also prevent components from protruding outward.

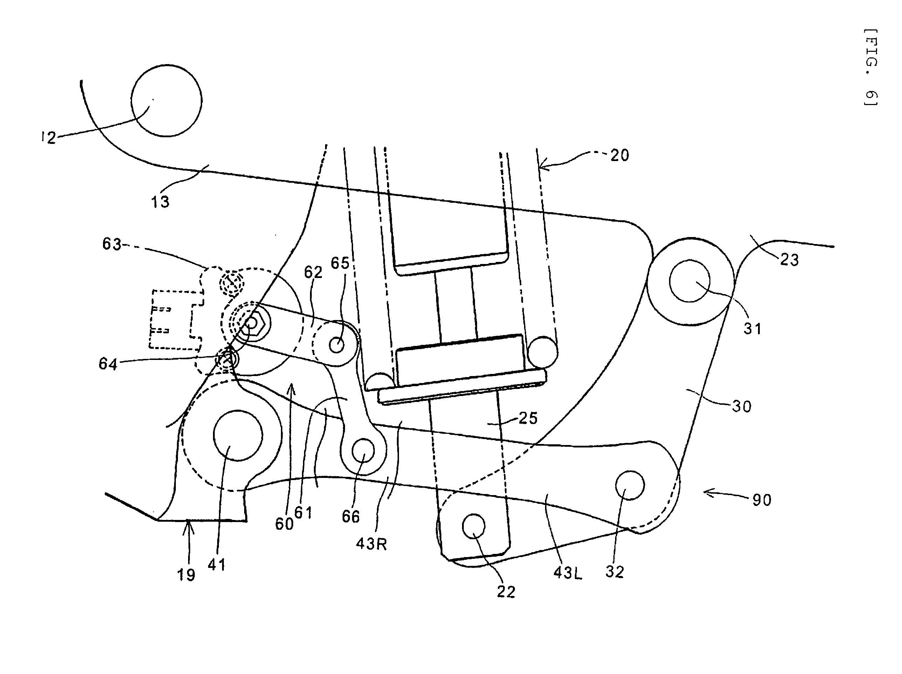

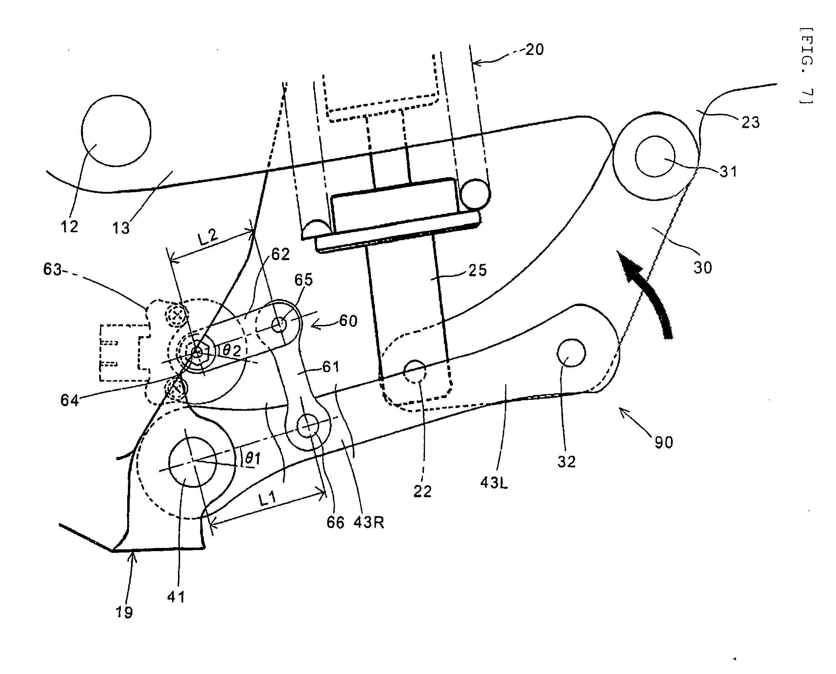

Figs. 6 and 7 are explanatory diagrams each showing the relationship between the swing arm 13 in swinging motion and the stroke sensor system 60 in operation. Fig. 6 shows a state (e.g., a state in which the shock absorber 20 is fully extended) in which the swing arm 13 is at an initial position, and Fig. 7 shows a state (e.g., a state in which the shock absorber 20 is at full stroke) in which the swing arm 13 strokes to an upper swing limit position. It should be noted that in this embodiment, along with the placement of the rotation angle sensor 63 above the vehicle-body-side rotational shaft 41, the rotation angle transmission mechanism including the first and second levers 61 and 62 is also located above the cushion connecting rod 40, whereby the stroke sensor system 60 is more likely to be protected from splashes of water and the like during driving.

The first lever 61 has one end thereof rotatably and pivotally supported by a rotational shaft 66 on the right arm portion 43R of the cushion connecting rod 40, and has the other end thereof rotatably and pivotally supported by a connecting rotational shaft 65 on one end of the second lever 62. The second lever 62 has one end thereof rotatably and pivotally supported by the connecting rotational shaft 65 on the first lever 61 , and has the other end thereof attached to a rotational shaft 64 of the rotation angle sensor 63 in a non-rotatable manner.

It should be noted that in this embodiment, all of rotational shafts including the rotational shaft 64 of the rotation angle sensor 63, the connecting rotational shaft 65 for connecting the first and second levers 61 and 62 so as to allow the first and second levers 61 and 62 to rotate with respect to each other, the rotational shaft 66 by which the first lever 61 is rotatably and pivotally supported on the right arm portion 43R, the vehicle-body-side rotational shaft 41 by which the cushion connecting rod 40 is rotatably and pivotally supported on the cushion connecting rod mounting portions 19, and the rotational shaft 22 on which a lower mounting portion 25 of the shock absorber 20 and the cushion arm 30 are rotatably and pivotally supported, are disposed parallel to the pivot shaft 12. Further, the rotation angle transmission means may be connected to the left arm L of the cushion connecting rod 40.

Incidentally, in a link mechanism as described previously, a change in the angle of a cushion connecting rod in response to the operation of a rear wheel suspension is not large (e.g., less than 30 degrees). Accordingly, to perform high-precision stroke sensing with a rotation angle sensor being located on the axis of a vehicle-body-side rotational shaft of a cushion connecting rod, a high-precision sensor is needed. On the other hand, in this embodiment, since the link-type rotation angle transmission mechanism amplifies the swing angle of the cushion connecting rod and transmits the amplified angle to the rotation angle sensor, high-precision stroke sensing can be performed even when a rotation angle sensor with a usual precision is used.

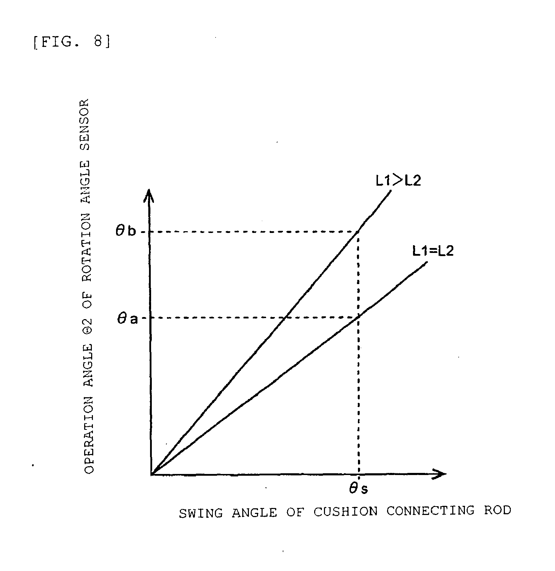

As shown in Fig. 7, in this embodiment, the center-to-center distance between the vehicle-body-side rotational shaft 41 and the rotational shaft 66 is set to L1, and the center-to-center distance between the rotational shaft 64 of the rotation angle sensor 63 and the connecting rotational shaft 65 is set to L2, which is smaller than L1. Thus, when the cushion connecting rod 40 swings by θ1 along with the swinging motion of the swing arm 13, the rotation angle of the rotational shaft 64 of the rotation angle sensor 63 can be obtained to be θ2, which is larger than θ1. Fig. 8 is now referred to.

Fig. 8 is a graph showing an example of the relationship between the swing angle of the cushion connecting rod and the operation angle (rotation angle of the rotational shaft) of the rotation angle sensor. As shown in the drawing, in the case where the swing angle of the cushion connecting rod is θs and the center-to-center distances L1 and L2 are equal to each other, the operation angle of the rotation angle sensor is θa. By setting the center-to-center distance L1 larger than L2, the operation angle increases to θb.

In this embodiment, the first and second levers 61 and 62 are set to make approximately a right angle when the swing arm 13 is at full stroke, i.e., when the swing arm 13 is at the upper swing limit position. This enables the stroke sensor system to operate in a range in which the rotation angle transmission means easily operates, and can increase the sensing precision of the swing angle of the swing arm around at the full stroke position. It should be noted that the swing angles of the cushion connecting rod 40 and the swing arm 13 in the case where the first and second levers 61 and 62 make approximately a right angle can be set as desired, respectively.

The correspondence between the swing angle of the cushion connecting rod 40 and the rotation angle of the rotational shaft 64 can beforehand be derived at the time of design. Accordingly, the swing angle of the cushion connecting rod 40 can be sensed based on the output value of the rotation angle sensor 63. Once the swing angle of the cushion connecting rod 40 has been found out, it is possible to calculate as desired, based on design dimensions, values corresponding to this swing angle, which include the swing angle of the swing arm 13, the contraction distance of the shock absorber 20, the vertical travel distance of the rear wheel WR, and the like.

As described above, the stroke sensor system according to the present invention can be mounted without greatly changing the shapes of the shock absorber 20, the swing arm 13, and the like. Accordingly, the stroke sensor system can relatively easily be mounted to an existing type of motorcycle which is not designed to mount a stroke sensor system. Further, the stroke sensor system can easily be mounted or removed. Accordingly, the stroke sensor system is easily set for different specifications for the same vehicle type without using different dedicated components for different specifications.

It should be noted that the sensing of the stroke of the rear wheel suspension may be executed while the vehicle is stopped or travelling. Information on the sensed stroke can be used in the following ways. Specifically, for example, the information is used, according to a stroke while the vehicle is stopped, i.e., according to a loaded weight, to automatically actuate the function of adjusting the vehicle height using the link mechanism, the function of adjusting the compression and rebound damping forces and spring preload of the shock absorber, and the like. The information is also used during driving to always maintain the optical axis of a headlight at a constant level.

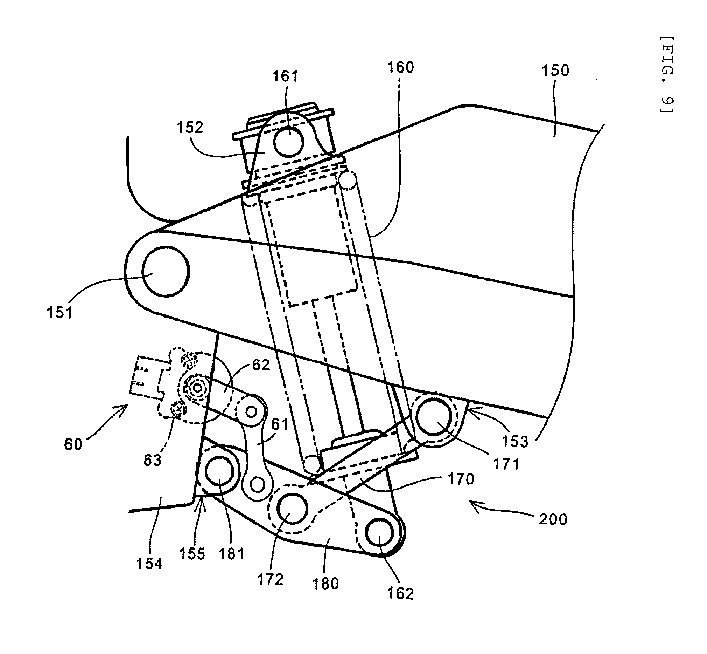

Fig. 9 is a side view of a principal portion of a motorcycle to which a stroke sensor system according to a second embodiment of the present invention is applied. In this second embodiment, the stroke sensor system 60 is applied to a link mechanism 200 of a rear wheel suspension having a structure different from that of the above-described embodiment.

A swing arm 150 according to this embodiment is swingably and pivotally supported by a pivot shaft 151 provided to a pivot plate 154 of the vehicle-body frame. An upper portion of a shock absorber 160 is rotatably and pivotally supported by a rotational shaft 161, formed by use of a mounting bolt, on a shock absorber mounting portion 152 provided to the swing arm 150. The link mechanism 200 principally includes first and second links 170 and 180. A rear end portion of the first link 170 is rotatably and pivotally supported by a swing-arm-side rotational shaft 171, formed by use of a mounting bolt, on a first link mounting portion 153 formed on the lower surface of the swing arm 150.

The second link 180 is provided with three rotational shafts. A vehicle-rear-side end portion of the second link 180 rotatably and pivotally supports a lower mounting portion of the shock absorber 160 by a rotational shaft 162 formed by use of a mounting bolt. A vehicle-front-side end portion of the second link 180 is rotatably and pivotally supported on a second link mounting portion 155 formed on the pivot plate 154 by a vehicle-body-side rotational shaft 181 formed by use of a mounting bolt. An approximately longitudinal center portion of the second link 180 is rotationally connected to a front-side end portion of the first link 170 by a rotational shaft 172 formed by use of a mounting bolt.

The rotation angle sensor 63 of the stroke sensor system 60 is mounted to the pivot plate 154. In the rotation angle transmission means including the first and second levers 61 and 62, one end portion of the first lever 61 is rotatably and pivotally supported on the second link 180 so that the swing angle of the second link 180 with respect to the pivot plate 154 will be transmitted to the rotational shaft of the rotation angle sensor 63. The above-described configuration enables the stroke sensor system 60 to sense the swing angle of the second link 180 which swings as the swing arm 150 swings.

As shown in this second embodiment, the stroke sensor system 60 according to the present invention constitutes part of the link mechanism of the rear wheel suspension and also senses the swing angle of a predetermined component (e.g., the cushion connecting rod of the first embodiment, the second link of the second embodiment, or the like) which is rotatably and pivotally supported on the vehicle-body frame by a vehicle-body-side rotational shaft, thus enabling the sensing of the stroke of the rear wheel suspension.

As described above, the stroke sensor system according to the present invention employs the rotation angle transmission means including the first and second levers so that the swing angle of the cushion connecting rod will be transmitted to the rotation angle sensor mounted to the vehicle-body frame. Accordingly, the rotational shaft of the rotation angle sensor rotates along with the swinging motion of the swing arm, and the rotation angle sensor can sense the swing amount of the swing arm. Thus, the stroke of a rear wheel suspension of a two-wheeled vehicle can be sensed with a rotation angle sensor having a simpler structure than that of a stroke sensor of an expansion-contraction type.

It should be noted that the configuration and location of the rotation angle sensor, the dimensions and location of the rotation angle transmission mechanism including the first and second levers, the configurations and locations of the cushion connecting rod and the cushion arm, and the like are not limited to those of the above-described embodiments, but various modifications can be made thereto. For example, the rotation angle sensor may be mounted below the cushion connecting rod mounting portions, and the rotation angle transmission mechanism may be located vehicle-widthwise outward of an arm portion. Further, the rotation angle sensor may be formed by use of a rotary encoder or the like. The stroke sensor system according to the present invention is applicable to swing arm suspensions of, not only motorcycles, but also various vehicles.

### [Brief Description of the Drawings]

[Fig. 1] Fig. 1 is a side view of a motorcycle to which a stroke sensor system according to an embodiment of the present invention is applied.
[Fig. 2] Fig. 2 is an enlarged view showing part of Fig. 1 with exterior components being removed.
[Fig. 3] Fig. 3 is a cross-sectional view of a swing arm as seen from the top.
[Fig. 4] Fig. 4 is a view for explaining the arrangement of a link mechanism.
[Fig. 5] Fig. 5 is an enlarged view showing part of Fig. 4.
[Fig. 6] Fig. 6 is an explanatory diagram (initial state) showing the relationship between the swing arm in swinging motion and the stroke sensor system in operation.
[Fig. 7] Fig. 7 is an explanatory diagram (full stroke state) showing the relationship between the swing arm in swinging motion and the stroke sensor system in operation.
[Fig. 8] Fig. 8 is a graph showing an example of the relationship between the swing angle of a cushion connecting rod and the operation angle of a rotation angle sensor.
[Fig. 9] Fig. 9 is a side view of a principal portion of a motorcycle to which a stroke sensor system according to a second embodiment of the present invention is applied.

### [Explanation of the Reference Numerals]

- 1: MOTORCYCLE
- 2: VEHICLE-BODY FRAME

- 6: ENGINE
- 12: PIVOT SHAFT
- 13: SWING ARM
- 14: AXLE
- 16: PIVOT PLATE
- 19: CUSHION CONNECTING ROD MOUNTING PORTION
- 20: SHOCK ABSORBER
- 40: CUSHION CONNECTING ROD
- 41: VEHICLE-BODY-SIDE ROTATIONAL SHAFT
- 43L, R: ARM PORTION
- 60: STROKE DISTANCE SENSOR SYSTEM
- 61: FIRST LEVER (ROTATION ANGLE TRANSMISSION MECHANISM)
- 62: SECOND LEVER (ROTATION ANGLE TRANSMISSION MECHANISM)
- 65: CONNECTING ROTATIONAL SHAFT
- 66: ROTATIONAL SHAFT
- 63: ROTATION ANGLE SENSOR
- 64: ROTATIONAL SHAFT OF ROTATION ANGLE SENSOR
- 90: LINK MECHANISM
- 100: REAR WHEEL SUSPENSION
- WR: REAR WHEEL

## Claims

1. A two-wheeled vehicle with a stroke sensor system, the two-wheeled vehicle comprising:
a rear wheel suspension including a swing arm (13), a shock absorber (20) and a link mechanism, the swing arm (13) being swingably and pivotally supported on a vehicle-body frame (2) by a pivot shaft (12), the link mechanism connecting the vehicle-body frame (2) and the swing arm (13) in cooperation with the shock absorber (20),
the stroke sensor system comprising:
a rotation angle sensor (63) being mounted to the vehicle-body frame (2) and having a rotational shaft (64) oriented parallel to the pivot shaft (12);
a cushion connecting rod (40) constituting part of the link mechanism, the cushion connecting rod (40) being rotatably and pivotally supported on the vehicle-body frame (2) by a vehicle-body-side rotational shaft (41), and swings in conjunction with the swing arm (13); and
a rotation angle transmission mechanism including first and second levers, the first lever (61) having one end rotatably and pivotally supported on an arm portion (43L, R) of the cushion connecting rod (40), the second lever (62) having one end fixed on the rotational shaft (64) of the rotation angle sensor (63), the first and second levers having the other ends connected to each other with a connecting rotational shaft (65) so as to be rotatable with respect to each other,
wherein the rotational shaft (64) of the rotation angle sensor (63) and the vehicle-body-side rotational shaft (41) of the cushion connecting rod (40) are located apart from each other;
**characterized in that**
the distance between the rotational shaft (64) of the rotation angle sensor (63) and the connecting rotational shaft (65) is set smaller than the distance between the vehicle-body-side rotational shaft (41) of the cushion connecting rod (40) and a rotational shaft (66) at the one end of the first lever (61).

2. The stroke sensor system according to claim 1, wherein the rotational shaft (64) of the rotation angle sensor (63) is located above the vehicle-body-side rotational shaft (41) of the cushion connecting rod (40) in a vehicle body.

3. The stroke sensor system according to any one of claims 1 and 2, wherein the first and second levers are disposed to make approximately a right angle with respect to each other when the swing arm (13) is at an upper swing limit position.

4. The stroke sensor system according to any one of claims 1 to 3, wherein the rotation angle sensor (63) is a potentiometer.

## Patentansprüche

1. Zweirädriges Fahrzeug mit einem Hubsensorsystem, wobei das zweirädrige Fahrzeug umfasst:
eine Hinterradaufhängung, welche einen Schwingarm (13), einen Stoßdämpfer (20) und einen Verbindungsmechanismus enthält, wobei der Schwingarm (13) schwingbar und schwenkbar an einem Fahrzeugkarosserierahmen (2) durch eine Schwenkwelle (12) gelagert ist, wobei der Verbindungsmechanismus den Fahrzeugkarosserierahmen (2) und den Schwingarm (13) in Kooperation mit dem Stoßdämpfer (20) verbindet, wobei das Hubsensorsystem umfasst:
einen Drehwinkelsensor (63), welcher an dem Fahrzeugkarosserierahmen (2) montiert ist, und welcher eine Drehwelle (64) aufweist, welche parallel zu der Schwenkwelle (12) orientiert ist;
eine Dämpferverbindungsstange (40), welche einen Teil des Verbindungsmechanismus aufbaut, wobei die Dämpferverbindungsstange (40) drehbar und schwenkbar auf dem Fahrzeugkarosserierahmen (2) durch eine fahrzeugkarosserieseitige Drehwelle (41) gelagert ist und in Verbindung mit dem Schwingarm (13) schwingt; und
einen Drehwinkelübertragungsmechanismus, welcher einen ersten und einen zweiten Hebel enthält, wobei der erste Hebel (61) ein Ende aufweist, welches drehbar und schwenkbar auf einem Armabschnitt (43L, R) der Dämpferverbindungsstange (40) gelagert ist, wobei der zweite Hebel (62) ein Ende fixiert auf der Drehwelle (64) des Drehwinkelsensors (63) aufweist, wobei erster und zweiter Hebel die anderen Enden mit einer Verbindungsdrehwelle (65) miteinander verbunden aufweisen, um so hinsichtlich zueinander drehbar zu sein,
wobei die Drehwelle (64) des Drehwinkelsensors (63) und die fahrzeugkarosserieseitigen Drehwelle (41) der Dämpferverbindungsstange (40) getrennt voneinander angeordnet sind;
**dadurch gekennzeichnet, dass**
der Abstand zwischen der Drehwelle (64) des Drehwinkelsensors (63) und der Verbindungsdrehwelle (65) kleiner als der Abstand zwischen der fahrzeugkarosserieseitigen Drehwelle (41) der Dämpferverbindungsstange (40) und einer Drehwelle (66) an dem einen Ende des ersten Hebels (61) eingestellt ist.

2. Hubsensorsystem gemäß Anspruch 1, wobei die Drehwelle (64) des Drehwinkelsensors (63) über der fahrzeugkarosserieseitigen Drehwelle (41) der Dämpferverbindungsstange (40) in einer Fahrzeugkarosserie angeordnet ist.

3. Hubsensorsystem gemäß irgendeinem der Ansprüche 1 und 2, wobei erster und zweiter Hebel angeordnet sind, um ungefähr einen rechten Winkel hinsichtlich zueinander einzuschließen, wenn der Schwingarm (13) an einer oberen Schwingbegrenzungsposition ist.

4. Hubsensorsystem gemäß irgendeinem der Ansprüche 1 bis 3, wobei der Drehwinkelsensor (63) ein Potentiometer ist.

## Revendications

1. Véhicule à deux roues avec un système de capteur de course, le véhicule à deux roues comprenant :
Une suspension de roue arrière incluant un bras oscillant (13), un amortisseur (20) et un embiellage, le bras oscillant (13) étant supporté avec faculté d'oscillation et de pivotement sur une ossature de carrosserie de véhicule (2) par un arbre pivot (12), l'embiellage raccordant l'ossature de carrosserie de véhicule (2) et le bras oscillant (13) conjointement avec l'amortisseur (20),
le système de capteur de course comprenant :
un capteur d'angle de rotation (63) monté sur l'ossature de carrosserie de véhicule (2) et comportant un arbre rotatif (64) orienté parallèlement à l'arbre pivot (12) ;
une bielle à coussinet (40) faisant partie l'embiellage, la bielle à coussinet (40) étant supportée avec faculté de rotation et de pivotement sur l'ossature de carrosserie de véhicule (2) par un arbre rotatif (41) coté carrosserie de véhicule, et oscille conjointement avec le bras oscillant (13) ; et
un mécanisme de transmission d'angle de rotation incluant des premier et second leviers, le premier levier (61) ayant une extrémité supportée avec faculté de rotation et de pivotement sur une portion de bras (43L, R) de la bielle à coussinet (40), le second levier (62) ayant une extrémité fixée sur l'arbre rotatif (64) du capteur angle de rotation (63), les premier et second leviers ayant les autres extrémités raccordées l'une à l'autre avec un arbre rotatif de raccord (65) de façon à être rotatifs l'un par rapport à l'autre,
où l'arbre rotatif (64) du capteur d'angle de rotation (63) et l'arbre rotatif (41) côté carrosserie de véhicule de la bielle à coussinet (40) sont espacés l'un de l'autre ;
**caractérisé en ce que**
la distance entre l'arbre rotatif (64) du capteur d'angle de rotation (63) et l'arbre rotatif de raccord (65) est fixé plus petite que la distance entre l'arbre rotatif (41) côté carrosserie de véhicule de la bielle à coussinet (40) et un arbre rotatif (66) à la première extrémité du premier levier (61).

2. Système de capteur de course selon la revendication 1, dans lequel l'arbre rotatif (64) du capteur d'angle de rotation (63) est situé au-dessus de l'arbre rotatif (41) côté carrosserie de véhicule de la bielle à coussinet (40) dans une carrosserie de véhicule.

3. Système de capteur de course selon l'une quelconque des revendications 1 et 2, dans lequel les premier et second leviers sont disposés pour faire approximativement un angle droit entre eux lorsque le bras oscillant (13) est à une position limite d'oscillation supérieure.

4. Système de capteur de course selon l'une quelconque des revendications 1 à 3, dans lequel le capteur d'angle de rotation (63) est un potentiomètre.
